# EUROPÄISCHE PATENTANMELDUNG

(11) **EP 2 506 110 A1**
(43) Veröffentlichungstag der Anmeldung: **03.10.2012**
(21) Anmeldenummer: 11002734.9
(22) Anmeldetag: 01.04.2011
(51) Int. Cl.: G06F 1/16

(54) **Handheld Computer**

(71) Anmelder: Stojadinovic, Predrag, 62064 Aachen (DE)
(72) Erfinder: Stojadinovic, Predrag, 62064 Aachen (DE)
(74) Vertreter: Rothkopf, Ferdinand

(57) **Zusammenfassung**

Ein Handheld-Computer, der Mittel zum Bereitstellen der Funktionalität eines mobilen Telefons und Mittel zum Bereitstellen der Funktionalität eines Organizers umfasst, ist erfindungsgemäß dadurch gekennzeichnet, dass der Handheld-Computer ferner Mittel zum Bereitstellen der Funktionalität eines herkömmlichen Personal-Computers umfasst.

## Beschreibung

### Hintergrund der Erfindung

Die Erfindung betrifft einen Handheld-Computer und weitere Komponenten, um im Zusammenspiel des Handheld-Computers mit diesen weiteren Komponenten eine erweiterte und für den Nutzer vielseitigere und verbesserte Funktionalität zu erzielen.

Der heutige Markt von Computer- und Rechner-Einrichtungen ist überfüllt mit Geräten unterschiedlicher Größen. Vom Handheld-Computer bis zum klassischen Desktop-Computer herkömmlicher Größe sind alle möglichen Ausgestaltungen zu finden. Jede Ausgestaltung hat ihre eigenen Vorteile und damit ihr eigenes Anwendungsgebiet. Zugleich ist der Anwendungsbereich jeder dieser Ausgestaltungen begrenzt, so dass die Nutzer von Computersystemen in der Regel mehrere Computer unterschiedlicher Größe bzw. Bauart besitzen. Auf jedem dieser Computer bzw. Rechner befinden sich Daten, was für den Nutzer zu erheblichem Synchronisierungsaufwand im Hinblick auf einen sinnvollen Abgleich der Daten führen kann. Daten sind oft nicht aktuell oder fehlen gänzlich. Konfigurationen der Computer müssen jeweils einzeln vorgenommen werden. Voreinstellungen fehlen ebenfalls oder müssen separat angepasst werden.

### Erfindungsgemäße Lösung

Diese Problematik ist erfindungsgemäß mit einem Handheld-Computer gelöst, der Mittel zum Bereitstellen der Funktionalität eines mobilen Telefons und Mittel zum Bereitstellen der Funktionalität eines Organizers umfasst und der ferner Mittel zum Bereitstellen der Funktionalität eines herkömmlichen Personal-Computers umfasst.

Erfindungsgemäß bevorzugt umfasst der derartige Handheld-Computer ferner Mittel zum Bereitstellen der Funktionalität eines Global-Positioning-Systems (GPS). Darüber hinaus ist vorzugsweise der Handheld-Computer mit Mitteln zum Bereitstellen der Funktionalität einer Kamera ausgestattet. Mit diesen Funktionen ist das Anwendungsgebiet des Handheld-Computers in Bezug auf seine Verwendung als tragbares und kleines Gerät in klassischer Weise vergrößert.

Der erfindungsgemäß gestaltete Handheld-Computer wird neben seiner Nutzung als tragbares Gerät vorzugsweise ferner in einem Computersystem verwendet, bei dem eine Netbook-Einrichtung vorgesehen ist, die eine Docking-Einheit zum Anschließen des Handheld-Computers umfasst und die dazu angepasst ist, in Zusammenwirkung mit dem Handheld-Computer die Funktionalität eines herkömmlichen Netbook-Computers bereitzustellen.

Erfindungsgemäß bevorzugt ist ferner ein Computersystem mit einem derartigen Handheld-Computer, das mit einer Laptop-Einrichtung versehen ist, die eine Docking-Einheit zum Anschließen des Handheld-Computers umfasst und die dazu angepasst ist, in Zusammenwirkung mit dem Handheld-Computer die Funktionalität eines herkömmlichen Laptop-Computers bereitzustellen.

Ferner ist erfindungsgemäß bevorzugt ein Computersystem mit einem derartigen Handheld-Computer geschaffen, bei dem eine Desktop-Einrichtung vorgesehen ist, die eine Docking-Einheit zum Anschließen des Handheld-Computers umfasst und die dazu angepasst ist, in Zusammenwirkung mit dem Handheld-Computer die Funktionalität eines herkömmlichen Desktop-Computers bereitzustellen.

Besonders bevorzugt ist die Laptop- bzw. Desktop-Einrichtung mit einem Datenträgerlaufwerk in Gestalt einer Festplatte und/oder eines Wechseldatenträgers (CD, DVD oder DVD RW) versehen. Die Funktionalität als vollwertiger Personal-Computer ist für den Nutzer mit diesen Laufwerken bei gleichzeitiger Nutzung seines Handheld-Computers vervollständigt.

Die erfindungsgemäße Lösung sieht gemäß den oben genannten erzielten Vorteilen ferner eine Netbook-Einrichtung mit einer Docking-Einheit zum Anschließen eines Handheld-Computers und einem Mittel zum Übernehmen von Dateien, Konfigurationen und/oder Voreinstellungen des Handheld-Computers auf die Netbook-Einrichtung vor, um mit dieser dadurch die Funktionalität eines herkömmlichen Netbook-Computers bereitzustellen.

Ferner ist erfindungsgemäß bevorzugt eine Laptop-Einrichtung mit einer Docking-Einheit zum Anschließen eines Handheld-Computers und einem Mittel zum Über nehmen von Dateien, Konfigurationen und/oder Voreinstellungen des Handheld-Computers auf die Laptop-Einrichtung geschaffen, um mit dieser dadurch die Funktionalität eines herkömmlichen Laptop-Computers bereitzustellen.

Schließlich sieht die erfindungsgemäße Lösung auch eine Desktop-Einrichtung mit einer Docking-Einheit zum Anschließen eines Handheld-Computers und einem Mittel zum Übernehmen von Dateien, Konfigurationen und/oder Voreinstellungen des Handheld-Computers auf die Desktop-Einrichtung vor, um mit dieser dadurch die Funktionalität eines herkömmlichen Desktop-Computers bereitzustellen.

Die vorgenannten Docking-Einheiten können ferner vorteilhaft dazu angepasst sein und genutzt werden, den erfindungsgemäßen Handheld-Computer mit einem Fernseher, einem Großbildschirm oder einem Projektor zu verbinden. Gesteuert werden kann der Handheld-Computer dabei über eine drahtlose Fernsteuerung, wobei die Anordnung insbesondere zum Darstellen von Fotos und Videos genutzt werden kann.

Während der erfindungsgemäße Handheld-Computer an einer Docking-Einheit angeschlossen ist, behält er seine Funktionalität als tragbares Telefon und kann als solches weiter genutzt werden. Dabei kann insbesondere über eine Schnittstelle nach dem Bluetooth-Standard oder mittels Kabel eine Verbindung zu einem Mikrofon, einem Lautsprechen oder einem Headset herstellbar sein. Textnachrichten können mittels spezieller IM-Software übertragen werden und eine Internet-verbindung kann mittels einer 3G-Internetverbindung hergestellt werden, wenn keine WLAN-Verbindung besteht.

Die Docking-Einheit kann je nach gewünschter Verwendung mit weiteren Geräten ausgestattet sein. So kann insbesondere eine Zweitbatterie oder ein Zusatzspeicher für den Handheld-Computer bereitgestellt werden. Besonders vorteilhaft ist an der Docking-Einheit eine Sicherungseinrichtung, mittels der die Daten des Handheld-Computers automatisch gesichert werden. Die Docking-Einheit kann stecker- bzw. drahtgebunden konfiguriert sein. Alternativ ist eine drahtlose Verbindung zwischen Netbook-Einrichtung, Laptop-Einrichtung, Desktop-Einrichtung und/oder Fernseher, Großbildschirm oder Projektor bevorzugt.

### Kurzbeschreibung der Zeichnungen

Nachfolgend wird ein Ausführungsbeispiel der erfindungsgemäßen Lösung anhand der beigefügten schematischen Zeichnungen näher erläutert. Es zeigt:

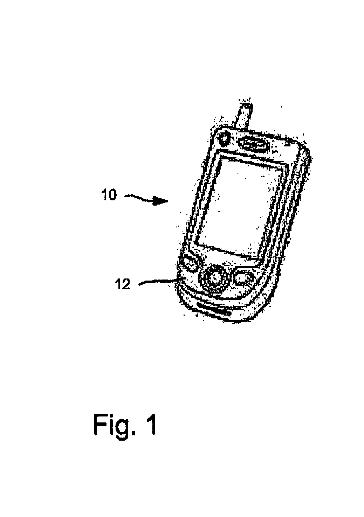

- Fig. 1: eine perspektivische Ansicht eines erfindungsgemäßen HandheldComputers,
- Fig. 2: eine perspektivische Ansicht einer erfindungsgemäßen Netbook-Einrichtung nebst angekoppeltem Handheld-Computer,

- Fig. 3: eine perspektivische Ansicht einer erfindungsgemäßen Laptop-Einrichtung nebst angekoppeltem Handheld-Computer,
- Fig. 4: eine perspektivische Ansicht einer erfindungsgemäßen Desktop-Einrichtung nebst angekoppeltem Handheld-Computer,
- Fig. 5: eine perspektivische Ansicht einer erfindungsgemäßen Docking-Einheit zum Anschließen des Handheld-Computers in einem Fahrzeug und
- Fig. 6: eine perspektivische Ansicht einer erfindungsgemäßen Docking-Einheit zum Anschließen des Handheld-Computers an einen Fernseher.

### Detaillierte Beschreibung des Ausführungsbeispiels

In den Fig. ist ein Handhold-Computer 10 veranschaulicht, der Mittel zum Bereitstellen der Funktionalität eines mobilen Telefons, Mittel zum Bereitstellen der Funktionalität eines Organizers und ferner Mittel zum Bereitstellen der Funktionalität eines herkömmlichen Personal-Computers umfasst. Darüber hinaus sind in dem Handheld-Computer Mittel zum Bereitstellen der Funktionalität eines Global-Positioning-Systems und Mittel zum Bereitstellen der Funktionalität einer Kamera innerhalb eines Gehäuses 12 verbaut. Das Gehäuse 12 ist derart klein gehalten, dass es von einem Nutzer des Handheld-Computers 10 innerhalb nur einer Hand gehalten werden kann.

Für sich allein gestellt stellt der Handheld-Computer 10, so wie jeder derzeit bekannte Handheld-Computer auch, die Funktionalitäten eines mobilen Telefons bzw. Mobile-Phones und eines Organizers bereit. Unter mobilem Telefon wird dabei jene Art von Telefon verstanden, die im derzeit gebräuchlichen GPRS-Netz funktionieren und/oder die Datenstandards EDGE (Enhanced Data Rates for GSM Evolution), GSM (Global System for Mobile Communication), HSDPA (High Speed Downlink Packet Access) oder UMTS (Universal Mobile Telecommunications Systems) verarbeiten kann. Solche Telefone senden und empfangen derzeit in den Frequenzbereichen 900 und 1800 Mhz (Europa) sowie 850 Mhz (USA). Mit diesen Standards können auch SMS-Meldungen ausgetauscht werden.

Ferner umfasst der Handheld-Computer 10, ebenfalls wie klassische Handheld-Computer auch, einen Organizer, also eine Telefondatenverwaltung mit Kontakt- und gegebenenfalls Adressdaten. Der Organizer kann auch die Funktionen eines Kalenders bereitstellen. Mit solchen Handheld-Computern ist auch der Austausch von E-Mails möglich.

Handheld-Computer dieser Art weisen in der Regel heutzutage einen Touch-Bildschirm oder eine Tastatur nach dem QWERTZ-Standard auf und werden auch als Smartphone oder PDA-Phone bezeichnet. Sie weisen inzwischen Prozessoren mit erheblicher Leistung auf, sowie Mittel zum Speichern von Dateien, Konfigurationen bzw. Konfigurationsdaten und Voreinstellungen. Dabei sind die Handheld-Computer mit speziell auf ihre Funktionalität abgestimmten Betriebssystemen versehen. Manche Handheld-Computer ermöglichen es inzwischen, dass auf ihnen so genannte Apps abgespielt werden. Diese Apps sind Programme, die über das Internet auf den Handheld-Computer aufgespielt werden können und unter dem dortigen Betriebssystem ausgeführt werden können.

Erfindungsgemäß ist der Funktionsumfang des Handheld-Computers 10 dahingehend vergrößert, dass dieser auch die Funktionen eines herkömmlichen Personal-Computers bereitstellen kann. Personal-Computer sind dazu ausgelegt, dass auf ihnen vergleichsweise umfangreiche Programme ausgeführt und auch größere Datenmengen verarbeitet werden können. Personal-Computer umfassen ein Mainboard mit einem Prozessor (CPU) und einem Arbeitspeicher (RAM). Das Mainboard ist quasi der eigentliche Computer. Auf ihm sind alle für den Betrieb des Computersystems erforderlichen Komponenten wie der Prozessor, der Arbeitsspeicher, eine Graphikkarte und in der Regel auch Laufwerke verbaut bzw. angeschlossen. Mit dem erfindungsgemäßen Handheld-Computer ist insbesondere dieses Mainboard ersetzt und die gleiche Funktionalität innerhalb des Handheld-Computers realisiert. Diese Funktionalität ist zwar für den Betrieb des Handheld-Computers allein nicht erforderlich und nützlich, wohl aber im Zusammenwirken mit weiteren Komponenten der erfindungsgemäßen Lösung, wie sie nachfolgend weiter beschrieben werden.

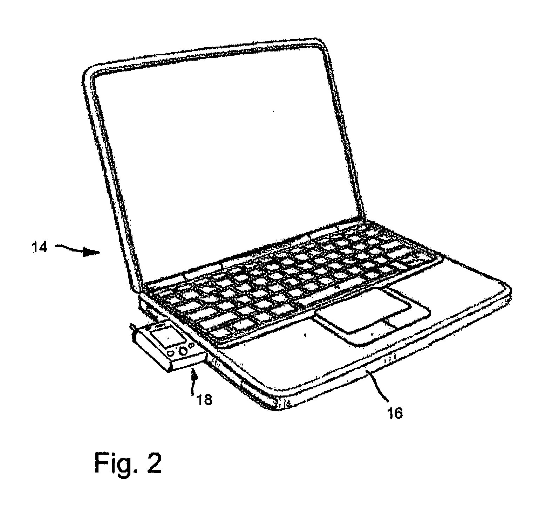

Der Handheld-Computer 10 ist dafür vorgesehen in einem Computersystem 14 (siehe Fig. 2) mit einer Netbook-Einrichtung 16 zusammenzuwirken, die eine Docking-Einheit 18 zum Anschließen des Handheld-Computers 10 umfasst und die dazu angepasst ist, wie oben erläutert in Zusammenwirkung mit dem Handheld-Computer 10 die Funktionalität eines herkömmlichen Netbook-Computers bereitzustellen.

Der derart ausgebildete und angekoppelte Handheld-Computer 10 umfasst die für einen Nutzer relevanten Dateien, Konfigurationen und Voreinstellungen. Zugleich ist der Handheld-Computer 10 in der Lage die wesentlichen Funktionen eines Netbook-Computers zu übernehmen, so dass für diesen insbesondere kein eigener Prozessor und besonders bevorzugt kein eigenes Mainboard erforderlich ist. Die Netbook-Einrichtung 16 kann daher vorzugsweise mit einem Bildschirm (in der Regel mit 4 bis 14 Zoll Bildschirmdiagonale) sowie Anschlüssen und Tastatur als eine ansonsten aber funktional weitgehend leere Hülle gestaltet sein. Sie ist entsprechend leicht und kostengünstig zu gestalten. Es kann insbesondere die Funktion eines Tableau-Computers inklusive einem Zugang zum Internet geschaffen werden, ohne dass es dazu eines eigenen Prozessors und eigener Speichereinrichtungen für Daten, Konfigurationsdaten und Voreinstellungen bedarf.

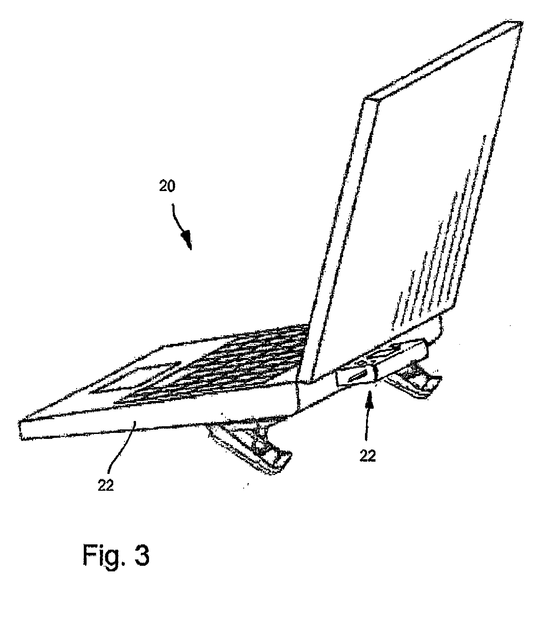

Darüber hinaus kann der Handheld-Computer 10 in ein Computersystem 20 integriert werden (siehe Fig. 3), wobei er an eine Laptop-Einrichtung 22 mittels einer Docking-Einheit 24 anschließbar ist. In Zusammenwirkung mit dem Handheld-Computer 10 entwickelt die Laptop-Einrichtung 22 wie oben erläutert die Funktionalität eines herkömmlichen Laptop-Computers. Für sich allein ist die Laptop-Einrichtung 22 hingegen ohne Prozessor-Funktionalität.

Die derartige Laptop-Einrichtung 22 umfasst selbst ebenfalls nur die Rahmenfunktionalitäten eines Laptops, wie ein klappbarer Bildschirm (in der Regel 12 bis 17 Zoll Bildschirmdiagonale), eine Tastatur und Anschlüsse sowie gegebenenfalls BlueRay, HDD, eine Zusatz-Batterie sowie ein Festplatten- und oder CD- bzw. DVD-Laufwerk (sämtlich gegebenenfalls nebst Treiberbausteinen), hat ansonsten aber keine eigene Prozessorfunktionalität. Somit ist ebenfalls auf kostengünstige Weise die Funktion eines vollwertigen Laptop-Computers geschaffen und zugleich stehen dem Nutzer ohne Zusatzaufwand seine eigenen Dateien, Konfigurationen und Voreinstellungen des Handheld-Computers 10 auch an dieser Laptop-Einrichtung 22 zur Verfügung.

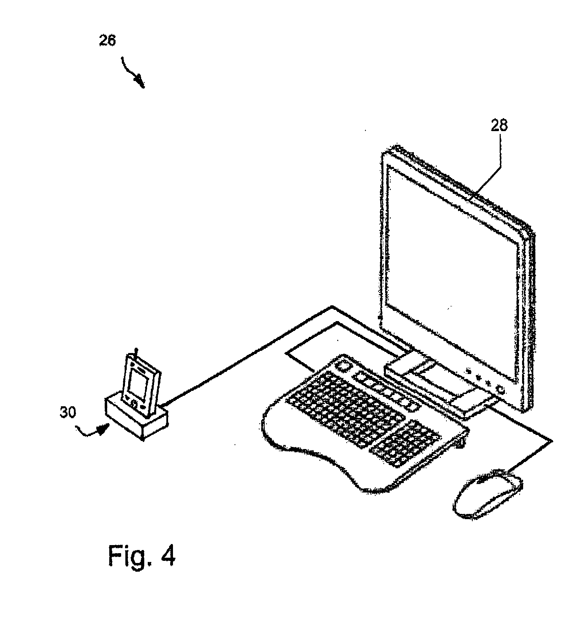

Ferner ist für den Handheld-Computer 10 ein entsprechend angepasstes Computersystem 26 vorgesehen (siehe Fig. 4), das eine Desktop-Einrichtung 28 umfasst. Die Desktop-Einrichtung 28 ist mit einer Docking-Einheit 30 zum Anschließen des Handheld-Computers 10 versehen und derart gestaltet, dass sie wie oben erläutert erst in Zusammenwirkung mit dem Handheld-Computer 10 die Funktionalität eines herkömmlichen Desktop-Computers bereitstellt.

Die derartige Desktop-Einrichtung 28 stellt mit dem daran angekoppelten Handheld-Computer 10 ebenfalls sämtliche Dateien, Konfigurationen und Voreinstellungen des Handheld-Computers 10 sowie dessen Prozessorfunktionalität zur Verfügung, ohne dass die Desktop-Einrichtung 28 eines eigenen Prozessors bedarf. Zugleich kann der Nutzer von der Desktop-Einrichtung 28 deren Bildschirm (in der Regel in einer Größe von 17 Zoll und mehr Bildschirmdiagonale) und dessen Tastatur, Maus und weitere Anschlüsse (insbesondere USB-Anschlüsse) nutzen.

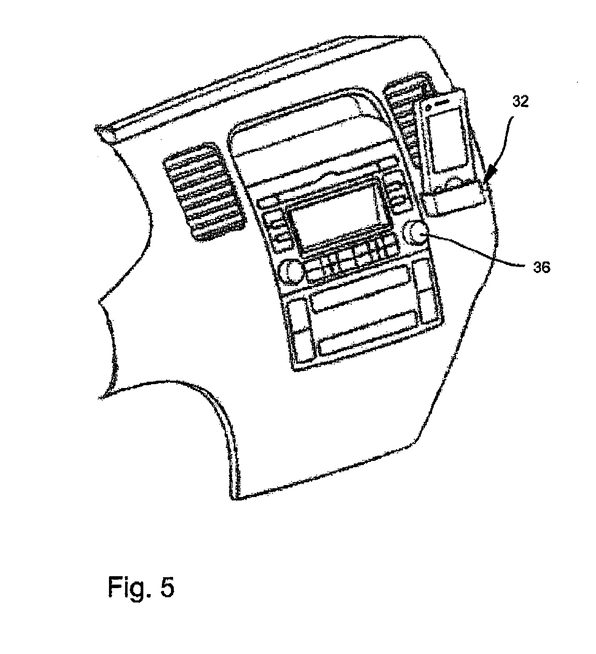

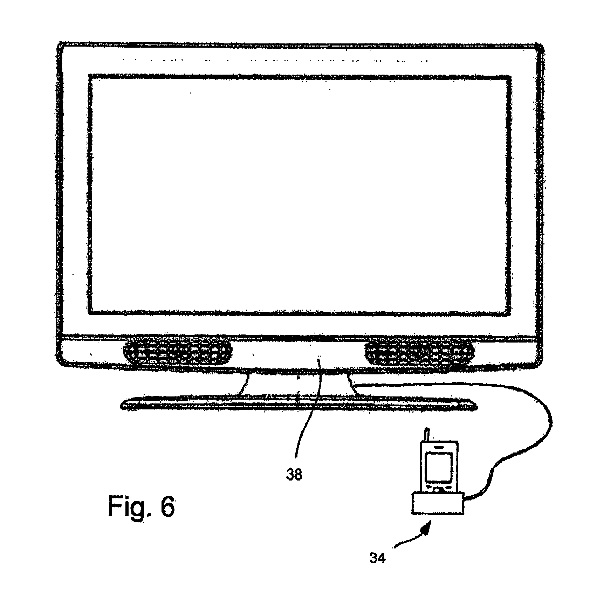

Wie in den Fig. 5 und 6 veranschaulicht ist, sind für den Handheld-Computer 10 ferner Docking-Einheiten 32 und 34 vorgesehen, mittels denen dieser an einen Fahrzeug-Radio 36 bzw. an ein Fernseher 38 angekoppelt werden kann. Abschließend sei angemerkt, dass sämtlichen Merkmalen, die in den Anmeldungsunterlagen und insbesondere in den abhängigen Ansprüchen genannt sind, trotz dem vorgenommenen formalen Rückbezug auf einen oder mehrere bestimmte Ansprüche, auch einzeln oder in beliebiger Kombination eigenständiger Schutz zukommen soll.

### Bezugszeichenliste

- 10: Handheld-Computer
- 12: Gehäuse
- 14: Computersystem
- 16: Netbook-Einrichtung
- 18: Docking-Einheit
- 20: Computersystem
- 22: Laptop-Einrichtung
- 24: Docking-Einheit
- 26: Computersystem
- 28: Desktop-Einrichtung
- 30: Docking-Einheit
- 32: Docking-Einheit
- 34: Docking-Einheit
- 36: Fahrzeug-Radio
- 38: Fernseher

## Patentansprüche

1. Handheld-Computer (10), der Mittel zum Bereitstellen der Funktionalität eines mobilen Telefons und Mittel zum Bereitstellen der Funktionalität eines Organizers umfasst,
**dadurch gekennzeichnet, dass** der Handheld-Computer (10) ferner Mittel zum Bereitstellen der Funktionalität eines herkömmlichen Personal-Computers umfasst.

2. Handheld-Computer nach Anspruch 1,
**dadurch gekennzeichnet, dass** der Handheld-Computer (10) Mittel zum Bereitstellen der Funktionalität eines Global-Positioning-Systems umfasst.

3. Handheld-Computer nach Anspruch 1 oder 2,
**dadurch gekennzeichnet, dass** der Handheld-Computer (10) Mittel zum Bereitstellen der Funktionalität einer Kamera umfasst.

4. Computersystem (14) mit einem Handheld-Computer (10) nach einem der Ansprüche 1 bis 3,
**dadurch gekennzeichnet, dass** eine Netbook-Einrichtung (16) vorgesehen ist, die eine Docking-Einheit (18) zum Anschließen des Handheld-Computers (10) umfasst und die dazu angepasst ist, in Zusammenwirkung mit dem Handheld-Computer (10) die Funktionalität eines herkömmlichen Netbook-Computers bereitzustellen.

5. Computersystem (20) mit einem Handheld-Computer (10) nach einem der Ansprüche 1 bis 3,
**dadurch gekennzeichnet, dass** eine Laptop-Einrichtung (22) vorgesehen ist, die eine Docking-Einheit (24) zum Anschließen des Handheld-Computers (10) umfasst und die dazu angepasst ist, in Zusammenwirkung mit dem Handheld-Computer (10) die Funktionalität eines herkömmlichen Laptop-Computers bereitzustellen.

6. Computersystem (26) mit einem Handheld-Computer (10) nach einem der Ansprüche 1 bis 3,
**dadurch gekennzeichnet, dass** eine Desktop-Einrichtung (28) vorgesehen ist, die eine Docking-Einheit (30) zum Anschließen des Handheld-Computers (10) umfasst und die dazu angepasst ist, in Zusammenwirkung mit dem Handheld-Computer (10) die Funktionalität eines herkömmlichen Desktop-Computers bereitzustellen.

7. Computersystem (20; 26) nach Anspruch 5 oder 6,
**dadurch gekennzeichnet, dass** die Laptop- bzw. Desktop-Einrichtung (22; 28) mit einem Datenträgerlaufwerk in Gestalt einer Festplatte und/oder eines Wechseldatenträgers (CD, DVD RW) versehen ist.

8. Netbook-Einrichtung (16) mit einer Docking-Einheit (18) zum Anschließen eines Handheld-Computers (10) und einem Mittel zum Übernehmen von Dateien, Konfigurationen und/oder Voreinstellungen des Handheld-Computers (10) auf die Netbook-Einrichtung (16), um mit dieser dadurch die Funktionalität eines herkömmlichen Netbook-Computers bereitzustellen.

9. Laptop-Einrichtung (22) mit einer Docking-Einheit (24) zum Anschließen eines Handheld-Computers (10) und einem Mittel zum Übernehmen von Dateien, Konfigurationen und/oder Voreinstellungen des Handheld-Computers (10) auf die Laptop-Einrichtung (22), um mit dieser dadurch die Funktionalität eines herkömmlichen Laptop-Computers bereitzustellen.

10. Desktop-Einrichtung (28) mit einer Docking-Einheit (30) zum Anschließen eines Handheld-Computers (10) und einem Mittel zum Übernehmen von Dateien, Konfigurationen und/oder Voreinstellungen des Handheld-Computers (10) auf die Desktop-Einrichtung (28), um mit dieser dadurch die Funktionalität eines herkömmlichen Desktop-Computers bereitzustellen.
